# EUROPEAN PATENT APPLICATION

(11) **EP 4 152 251 A1**
(43) Date of publication of application: **22.03.2023**
(21) Application number: 22160468.9
(22) Date of filing: 07.03.2022
(51) Int. Cl.: G06T 7/00, G06T 7/136

(54) **JUDGMENT DEVICE, JUDGMENT SYSTEM, JUDGMENT METHOD, PROGRAM, AND STORAGE MEDIUM**

(30) Priority: 21.09.2021 JP 2021153266
(71) Applicant: KABUSHIKI KAISHA TOSHIBA, Minato-ku Tokyo 105-0023 (JP)
(72) Inventor: SATO, Hidenori, Tokyo, 105-0023 (JP); MANABE, Takahiro, Tokyo, 105-0023 (JP); HIROSE, Yusuke, Tokyo, 105-0023 (JP)
(74) Representative: Hoffmann Eitle

(57) **Abstract**

According to one embodiment, a judgment device (10) judges a goodness of an article by using an image. The judgment device determines one of conditions included in condition data by repeating a processing set. The processing set includes first to fourth processing. The first processing is of selecting one of the conditions. Each condition specifies preprocessing and a channel. The second processing is of acquiring processed images by applying the selected condition to each of good-part images and defective-part images. The third processing is of judging the goodness of the article in the processed images based on a result of comparing thresholds and pixel units. The fourth processing is of determining an evaluation of the selected condition by using a judgment result of the goodness for the good-part images or the defective-part images. The determining of the one of the conditions is based on the evaluations of the conditions.

## Description

### FIELD

Embodiments described herein relate generally to a judgment device, a judgment system, a judgment method, a program, and a storage medium.

### BACKGROUND

There is technology that judges the goodness of an article in an image. To increase the judgment accuracy, it is favorable for the processing applied to the image to be suited to the judgment.

### BRIEF DESCRIPTION OF THE DRAWINGS

FIG. 1 is a schematic view showing a configuration of a judgment system according to an embodiment;
FIG. 2 is a flowchart showing inspection processing according to the judgment device according to the embodiment;
FIG. 3 is a table illustrating condition data;
FIGS. 4A to 4C are images for describing the inspection processing;
FIGS. 5A to 5C are images for describing the inspection processing;
FIG. 6 is a flowchart showing setting processing of the condition according to the judgment device according to the embodiment;
FIGS. 7 is a schematic view illustrating a user interface;
FIGS. 8 is a schematic view illustrating a user interface;
FIGS. 9A to 9H are schematic views for describing the processing of the image;
FIGS. 10A to 10E are schematic views for describing the processing of the image;
FIGS. 11A to 11F are schematic views for describing the processing of the image;
FIG. 12 is a flowchart showing a method for adjusting the thresholds according to the judgment device according to the embodiment;
FIG. 13 is a flowchart showing another adjustment method according to the judgment device according to the embodiment;
FIG. 14 is a flowchart showing another adjustment method according to the judgment device according to the embodiment; and
FIG. 15 is a schematic view showing a hardware configuration.

### DETAILED DESCRIPTION

According to one embodiment, a judgment device judges a goodness of an article by using an image of the article. The judgment device determines one of a plurality of conditions included in condition data by repeating a processing set. The processing set includes first processing, second processing, third processing, and fourth processing. The first processing is of selecting one of the plurality of conditions. Each of the plurality of conditions specifies preprocessing and a channel to be used. The second processing is of acquiring a plurality of processed images by applying the selected condition to each of a plurality of good-part images and a plurality of defective-part images. The third processing is of judging the goodness of the article imaged in each of the plurality of processed images based on a result of comparing a plurality of thresholds and a plurality of pixel units. The plurality of pixel units is included in each of the plurality of processed images. The fourth processing is of determining an evaluation of the selected condition by using at least one selected from the group consisting of a judgment result of the goodness for the plurality of good-part images and a judgment result of the goodness for the plurality of defective-part images. The determining of the one of the plurality of conditions is based on the evaluations of the conditions.

Embodiments of the invention will now be described with reference to the drawings.

In the drawings and the specification of the application, components similar to those described thereinabove are marked with like reference numerals, and a detailed description is omitted as appropriate.

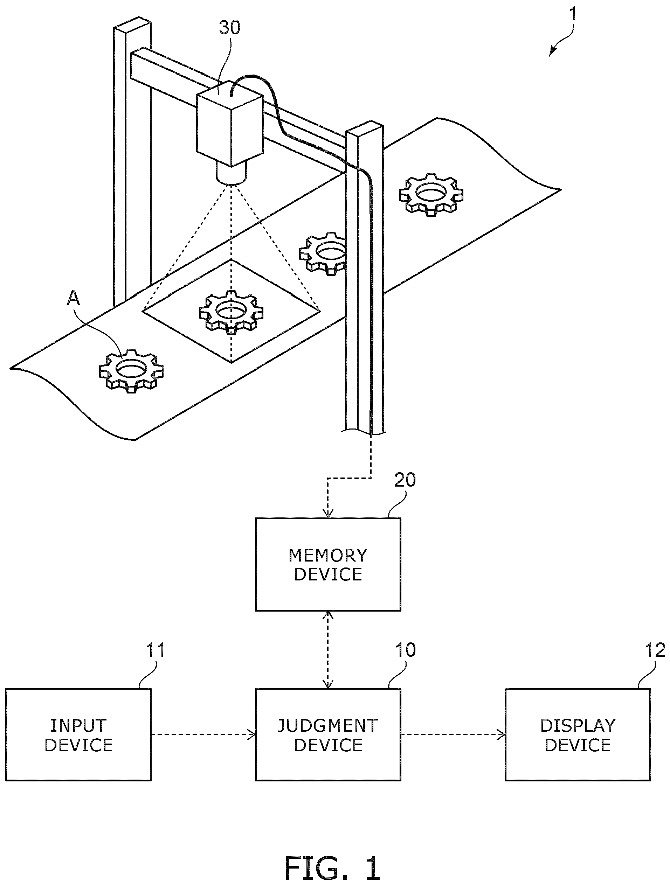

FIG. 1 is a schematic view showing a configuration of a judgment system according to an embodiment.

As shown in FIG. 1, the judgment system 1 according to the embodiment includes a judgment device 10, an input device 11, a display device 12, a memory device 20, and an imaging device 30. The judgment system 1 according to the embodiment can be used in a visual inspection of an article.

The imaging device 30 acquires an image by imaging an article A that is the inspection object. The imaging device 30 stores the acquired image in the memory device 20. The imaging device 30 acquires a still image of the article A. The imaging device 30 may acquire a video image and cut out a still image from the video image. The imaging orientation of the article A is appropriately set to obtain an image suited to the inspection. For example, multiple articles A are sequentially fed in one horizontal direction by a feeding apparatus 40. The imaging device 30 is fixed and sequentially images the fed articles A from above.

For example, the imaging device 30 acquires an RGB image. The imaging device 30 may acquire a HSV image or a HSL image. The image includes data of pixel values of multiple pixels and channels of each pixel. In an RGB image, the channels are the color information of R (red), G (green), or B (blue). In a HSV image, the channels are the color information of H (hue), S (saturation), or V (lightness). In a HSL image, the channels are the color information of H (hue), S (saturation), or L (luminance). Other than color, the image may further include channels of infrared light, ultraviolet light, or distance. Or, the imaging device 30 may include a polarized image sensor and may acquire a polarized image. In such a case, the channels include information of the polarization angles (0 degrees, 45 degrees, 90 degrees, 135 degrees, etc.).

The judgment device 10 acquires an image stored in the memory device 20. Or, the image may be directly transmitted from the imaging device 30 to the judgment device 10. The judgment device 10 judges the goodness of the article A in the image. The user uses the input device 11 to input data to the judgment device 10. The display device 12 displays the data output from the judgment device 10 so that the user can visually check the data.

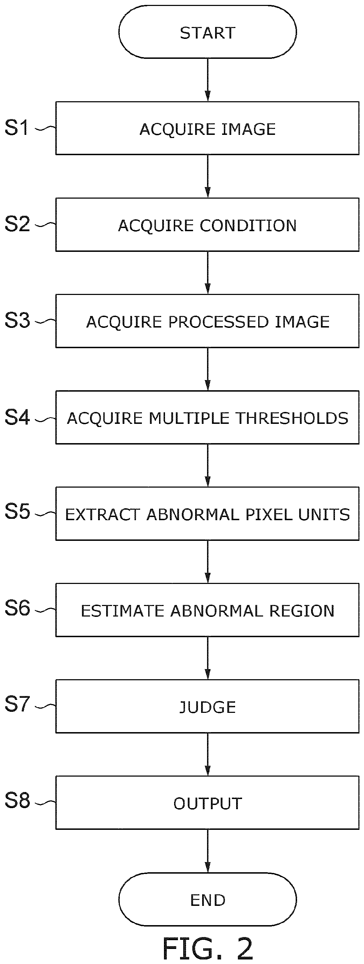

FIG. 2 is a flowchart showing inspection processing according to the judgment device according to the embodiment.

The judgment device 10 acquires an image by accessing the memory device 20 (step S1). One image includes multiple pixel units arranged in an X-direction and a Y-direction. For example, the pixel unit includes one pixel. Or, the pixel unit may include two or more pixels that are next to each other.

The judgment device 10 acquires a condition of the processing of the image of the article A by accessing the memory device 20 (step S2). The condition specifies the preprocessing of the image and the channel in the image to be used. The preprocessing is, for example, at least one selected from the group consisting of edge enhancement, noise removal, alignment, and tone correction. The edge enhancement includes, for example, at least one selected from the group consisting of a Sobel filter, a Laplacian filter, a dispersion filter, a sharpening filter, a maximum filter, a minimum filter, a Laplacian Of Gaussian (LOG) filter, and a Difference of Gaussian (DoG) filter. The noise removal includes, for example, at least one selected from the group consisting of a smoothing filter, a Gaussian filter, a median filter, a bilateral filter, dilation processing, erosion processing, and gamma correction. Alignment includes, for example, at least one selected from the group consisting of template matching, feature mapping, and position-only correlation. In tone correction, a coefficient is set for the pixel values of the channels. Preprocessing may include calculations between the images. The condition is set for each type of article. The judgment device 10 acquires a processed image by applying the condition to the image (step S3).

The judgment device 10 acquires multiple thresholds by accessing the memory device 20 (step S4). The multiple thresholds are used to judge whether or not the multiple pixel units included in the processed image are normal. One threshold is set for one pixel unit. Specifically, an upper limit and a lower limit of the pixel value are set as the threshold. Generally, the pixel value is an integer from 0 to 255. Integers from 0 to 255 are set as the upper and lower limits. When the pixel value is between the lower limit and the upper limit, the pixel unit that includes the pixel value is judged to be normal. When the pixel value deviates from the range between the lower limit and the upper limit, the pixel unit that includes the pixel value is judged to be abnormal.

When one pixel unit includes one pixel, the pixel value of the one pixel can be used as the pixel value of the one pixel unit. When one pixel unit includes two or more pixels, the average, weighted average, median value, etc., of the pixel values of the two or more pixels can be used as the pixel value of the one pixel unit.

The judgment device 10 compares the multiple thresholds and the multiple pixel values of the processed image and extracts an abnormal pixel unit that deviates from the thresholds (step S5). The judgment device 10 estimates an abnormal region based on the extracted abnormal pixel unit (step S6). For example, noise removal, dilation, erosion, and/or labeling are performed to estimate the abnormal region. Such processing generates and allows the identification of an aggregate (particle) of the abnormal pixel unit. The judgment device 10 estimates that the particle of the abnormal pixel unit is an abnormal region.

The judgment device 10 judges the goodness of the article in the image based on a feature of the abnormal region (step S7). At least one selected from the group consisting of the surface area of the abnormal region, the shape of the abnormal region, and the distribution of the pixel values in the abnormal region is used as the feature.

When surface area is used as the feature, the threshold of the surface area is preset. The surface area is represented by the number of pixels included in the abnormal region. The judgment device 10 judges that the article is defective when the surface area of the abnormal region is greater than the threshold.

For example, the aspect ratio is used as the shape. The aspect ratio is the ratio of the major-axis direction length to the minor-axis direction length. The major-axis direction is a direction parallel to the longest line segment connecting any two points on the outer edge of the particle. The minor-axis direction is perpendicular to the major-axis direction. When the shape is used as the feature, the threshold for the aspect ratio is preset. The magnitude relationship of the aspect ratio and the threshold is set according to the article. As an example, there is a tendency for the aspect ratio of the abnormal region to increase when the quality of the article that is the inspection object is poor. The judgment device 10 judges the article to be defective when the aspect ratio is greater than the threshold.

For example, the ratio (a first ratio) of the pixel unit number that is less than the lower limit threshold to the pixel unit number of the abnormal region, the ratio (a second ratio) of the pixel unit number that is greater than the upper limit threshold to the pixel unit number of the abnormal region, etc., are used as the distribution. When the distribution is used as the feature, a first threshold for the first ratio and a second threshold for the second ratio are preset. The judgment device 10 judges that the article is defective when the first ratio is greater than the first threshold or when the second threshold is greater than the second ratio.

The judgment device 10 outputs the judgment result (step S8). For example, the judgment device 10 stores the judgment result in the memory device 20. The image that is used in the inspection may be associated with the judgment result and stored in the memory device 20 by the judgment device 10. The image that is stored may be the image acquired by the imaging device 30 or may be an image processed according to a condition. The extracted abnormal pixel unit or the estimated abnormal region may be shown in the image. The judgment device 10 may cause the display device 12 to display the judgment result and the image.

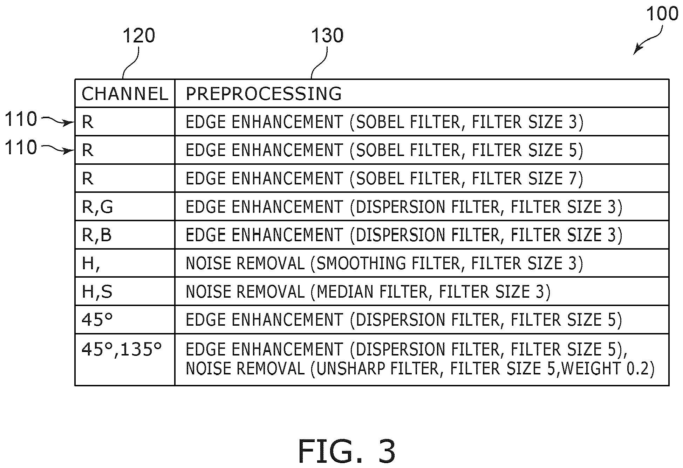

FIG. 3 is a table illustrating condition data.

As shown in FIG. 3, the condition data 100 includes multiple conditions 110. Each of the conditions 110 includes a combination of a channel 120 to be used and preprocessing 130 applied to the image. The condition to be used is preset for each type of article. According to the article that is the inspection object, the judgment device 10 selects one of the multiple conditions and applies the one of the multiple conditions to the image of the article.

An example is described herein in which the channel and the preprocessing are stored in one table. The channel and the preprocessing may be stored in separate tables. In such a case, the judgment device 10 selects conditions from the channel and the preprocessing and applies these conditions to the image.

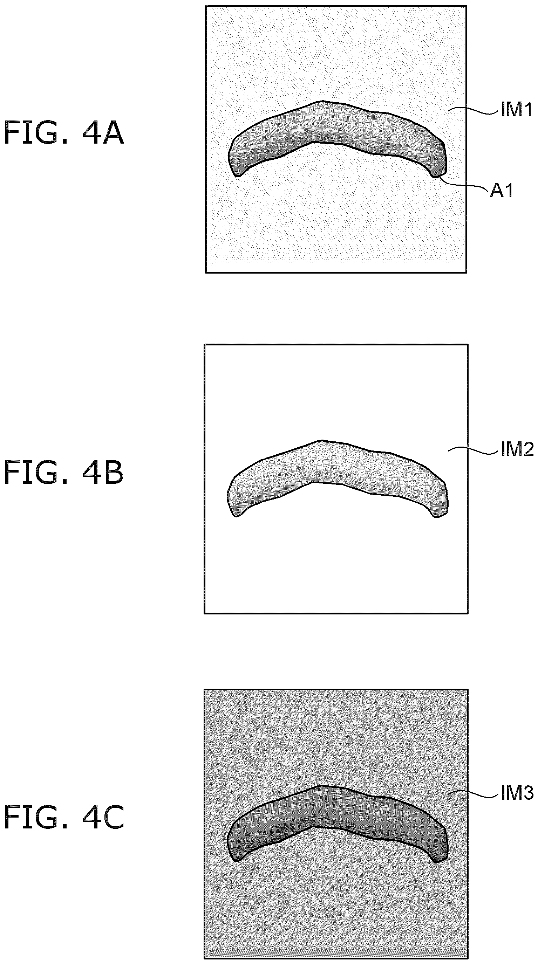

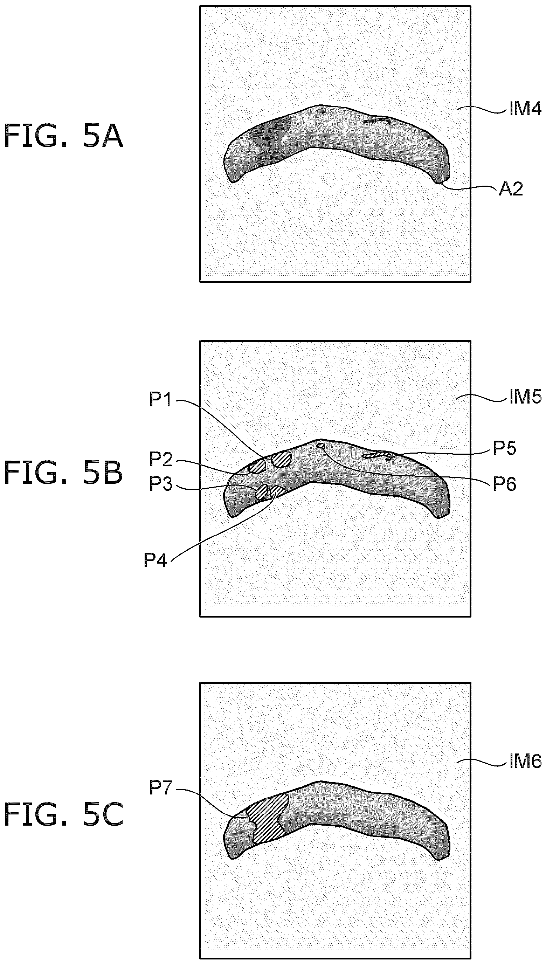

FIGS. 4A to 4C and FIGS. 5A to 5C are images for describing the inspection processing.

One pixel unit includes one pixel in the following description. FIG. 4A illustrates a processed image IM1 obtained by applying a condition selected from the condition data to the image of an article A1. FIGS. 4B and 4C are images illustrating thresholds of the pixels that are set for the processed image. Specifically, an image IM2 illustrated in FIG. 4B illustrates the upper limit of the threshold of each pixel. An image IM3 illustrated in FIG. 4C illustrates the lower limit of the threshold of each pixel. When any pixel in the processed image IM1 is brighter than the pixel at the same coordinate in the image IM2 or darker than the pixel at the same coordinate in the image IM3, that the pixel in the processed image IM1 is judged to be abnormal. In the example, the article A1 that is imaged in the processed image IM1 is judged to be good.

FIG. 5A illustrates a processed image IM4 that is obtained by applying a condition selected from the condition data to the image of an article A2. A defect exists in the article A2. Specifically, a portion of the article A2 is blackish compared to the article A1. The judgment device 10 uses the multiple thresholds to extract the abnormal pixels from the multiple pixels. An image IM5 illustrated in FIG. 5B illustrates an extracted abnormal pixel. In the example of FIG. 5B, particles P1 to P6 of the abnormal pixel are extracted.

The judgment device 10 estimates the abnormal region based on the particles P1 to P6. For example, the particles P5 and P6 are caused to disappear by noise removal and erosion. The particles P1 to P4 are caused to merge with each other by dilation. An image IM6 illustrated in FIG. 5C is obtained thereby. The image IM6 illustrates a particle P7 that includes abnormal pixels. The judgment device 10 estimates the particle P7 to be an abnormal region. The judgment device 10 judges the goodness of the article A2 based on a feature of the estimated abnormal region.

The appearance of the article and the appearance of the defect in the image greatly change according to the condition that is applied. To judge the goodness of the article in the image with high accuracy, it is favorable to appropriately set the applied condition.

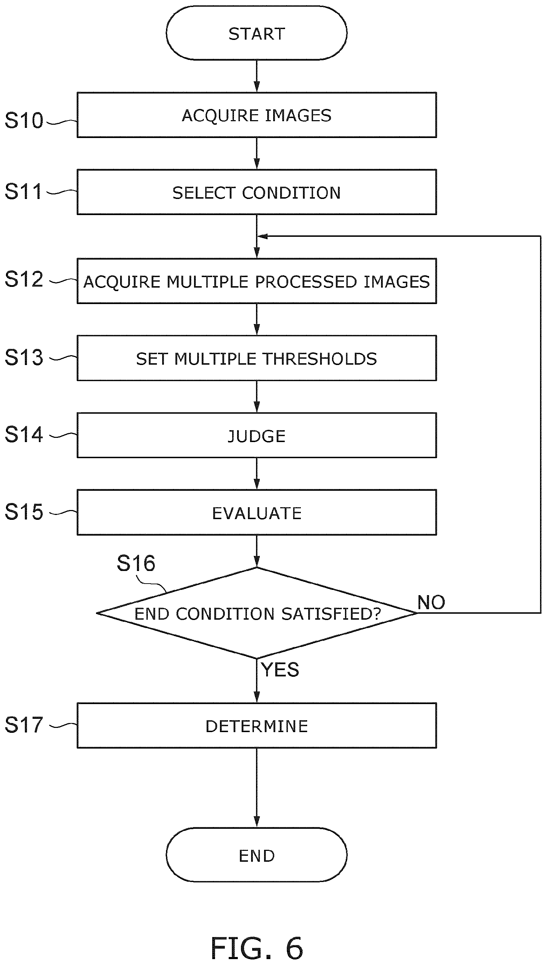

FIG. 6 is a flowchart showing setting processing of the condition according to the judgment device according to the embodiment.

First, the judgment device 10 acquires multiple good-part images and multiple defective-part images by accessing the memory device 20 (step S10). The multiple good-part images and the multiple defective-part images are prepared by the user. A good-part image is an image confirmed by the user to include an article having good quality. A defective-part image is an image confirmed by the user to include an article having poor quality.

The judgment device 10 selects one condition from the condition data (step S11; first processing). The judgment device 10 acquires multiple processed images by applying the selected condition to the multiple good-part images and the multiple defective-part images (step S12; second processing). The multiple processed images include multiple good-part processed images generated by processing the multiple good-part images and multiple defective-part processed images generated by processing the multiple defective-part images.

The judgment device 10 sets multiple thresholds (step S13). For example, the threshold is set at the same coordinate in the multiple good-part processed images by using the average and the dispersion of the pixel values positioned at the same coordinate. As an example, for each of the pixels, the threshold of the lower limit is set to (*µ* - 3*σ*), and the threshold of the upper limit is set to (*µ* + 3*σ*). *µ* is the average value. *σ* is the standard deviation. The average value and the dispersion may be calculated for each of the pixels by including pixels at the periphery as well. Oversensitivity of the detection of defects at the contour portion at which the pixel values greatly fluctuate can be suppressed thereby, and the judgment accuracy of the goodness can be increased.

The judgment device 10 judges the goodness of the article based on the result of comparing the multiple thresholds and the pixel values of the multiple pixels for each processed image (step S14; third processing). Steps S5 to S7 of the flowchart shown in FIG. 2 are performed to judge the goodness. The judgment device 10 evaluates the selected condition by using the judgment result of the goodness for the multiple good-part images or the judgment result of the goodness for the multiple defective-part images (step S15; fourth processing).

The evaluation uses at least one selected from the group consisting of a number V1 of articles judged to be good among the multiple good-part images, a number V2 of articles judged to be defective among the multiple good-part images, a number V3 of articles judged to be good among the multiple defective-part images, and a number V4 of articles judged to be defective among the multiple defective-part images.

For example, a correct solution rate is used in the evaluation. The correct solution rate is represented by the ratio of the sum of the numbers V1 and V4 to the total of the numbers V1 to V4. The match ratio, the reproducibility, the specificity, or the F-value may be used in the evaluation. The match ratio is represented by the ratio of the number V4 to the sum of the numbers V2 and V4. The reproducibility is represented by the ratio of the number V4 to the sum of the numbers V3 and V4. The specificity is represented by the ratio of the number V1 to the sum of the numbers V1 and V2. The F-value is represented by (2×*V4*)/(*V2* + *V3* + 2×*V4*). It is favorable for the correct solution rate, the match ratio, the reproducibility, the specificity, and the F-value to be high. The judgment device 10 uses the correct solution rate, the match ratio, the reproducibility, the specificity, or the F-value as a score of the evaluation of the condition. A higher score means that the evaluation of the condition is high.

The incorrect solution rate may be used in the evaluation. The incorrect solution rate is represented by the ratio of the number V2 to the sum of the numbers V1 and V2. The incorrect solution rate may be represented by the ratio of the number V3 to the sum of the numbers V3 and V4. It is favorable for the incorrect solution rate to be low. The judgment device 10 uses the incorrect solution rate as the score of the evaluation of the condition. A lower score means that the evaluation of the condition is high.

The judgment device 10 judges whether or not the end condition is satisfied (step S16). For example, the end condition is set to be when steps S12 to S15 are repeated and all of the conditions that were prepared beforehand have been selected. The end condition may be set to be when steps S12 to S15 are repeated a preset number of times. A threshold for the score may be set. In such a case, the end condition is set to be when the score reaches the threshold.

The judgment device 10 re-performs steps S12 to S15 when the end condition is not satisfied. In step S12, a condition that is different from the selected conditions up to that point is selected. When the end condition is satisfied, the judgment device 10 determines one condition to be used in the inspection based on the evaluations of the conditions (step S17).

Thereafter, the inspection processing is performed using the determined condition. In the inspection, the processing of the flowchart shown in FIG. 2 is performed for the image of the article that is the inspection object. The goodness of the article in the image is judged thereby. For example, the articles that are judged to be good pass the inspection. The articles that are judged to be defective fail the inspection.

The conditions that are included in the condition data may be preset by the user. The judgment device 10 may automatically select from candidates of the condition. For example, a list of selectable channels and a list of selectable preprocessing is prepared beforehand by the user. The judgment device 10 selects at least one channel from the list of channels and selects at least one preprocessing from the list of the preprocessing. The judgment device 10 generates conditions by combining the channels and the preprocessing that are selected. The judgment device 10 may randomly select channels and preprocessing or may select according to rules. The judgment device 10 generates multiple conditions by repeating the generation of the condition.

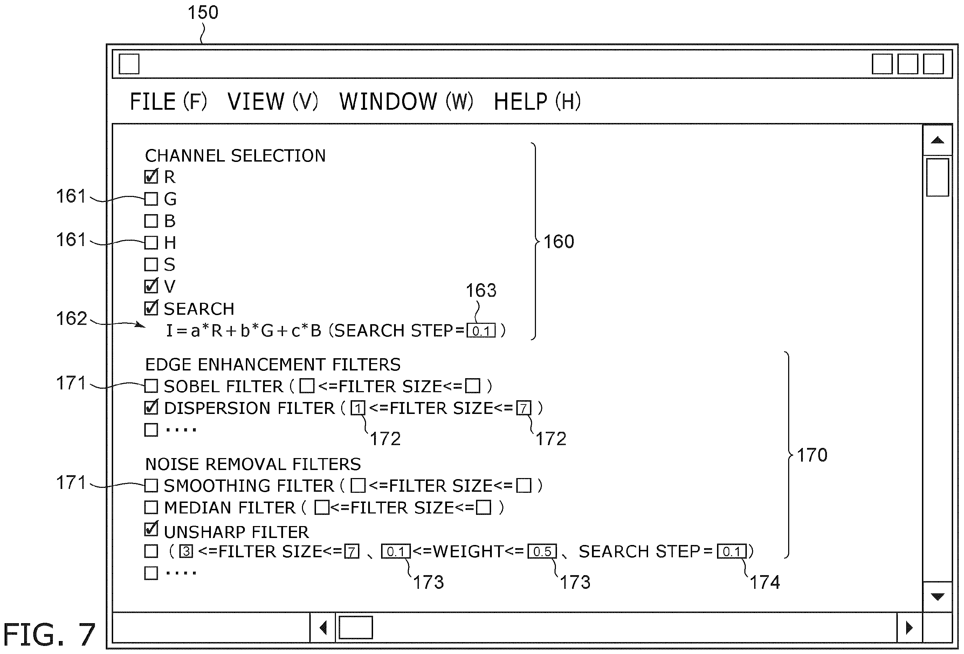

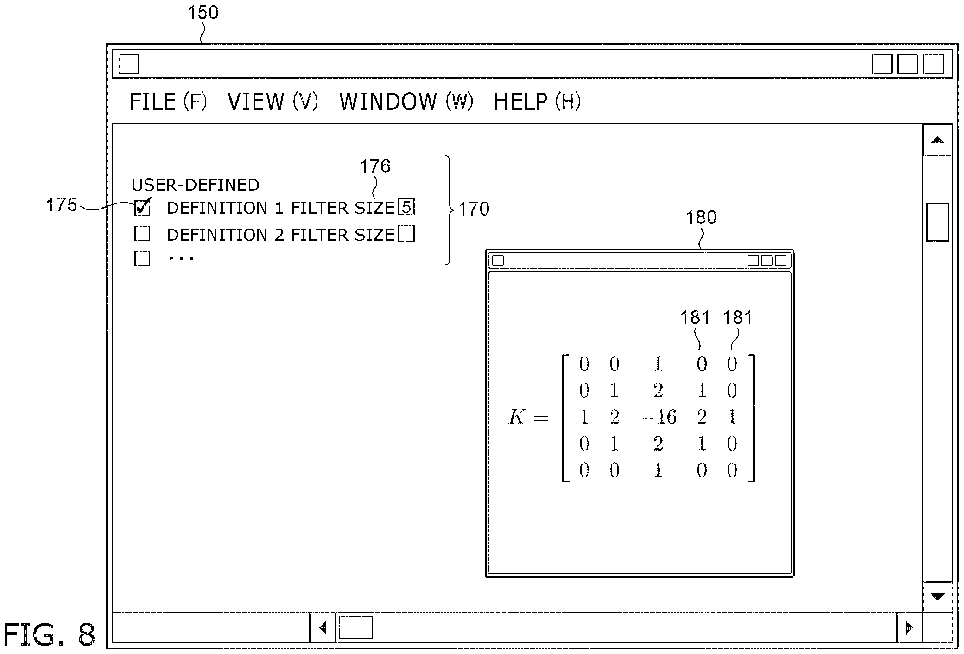

FIGS. 7 and 8 are schematic views illustrating a user interface.

The candidates of the conditions that can be selected may be designated by the user. For example, the judgment device 10 causes the display device 12 to display a window 150 shown in FIG. 7 as a graphical user interface (GUI). Channel candidates 160 and preprocessing candidates 170 are displayed in the window 150. Checkboxes 161 and 171 are displayed next to the channel candidates 160 and the preprocessing candidates 170.

The user can select the candidates of the conditions by operating the input device 11 to check the checkboxes 161 or 171. A channel candidate 162 is a grayscale conversion. The channel candidate 162 automatically searches for the coefficients of the pixel values of the channels for the grayscale conversion. The user can specify the step of each coefficient when searching by inputting a numerical value in an input field 163. Also, the user can specify the ranges of the filter sizes by inputting numerical values in input fields 172 in the preprocessing candidates 170 of the filters. The user can specify the weight when applying each filter by inputting numerical values in input fields 173. The user can specify the step of the weight when searching by inputting a numerical value in an input field 174.

As shown in FIG. 8, user-defined conditions may be settable by the user as the preprocessing candidate 170. For example, the user checks one of checkboxes 175 and inputs the filter size in an input field 176 of the checked item. For example, a window 180 is displayed when the user checks and inputs the filter size. A matrix that corresponds to the input filter size is displayed in the window 180. The user can freely set the content of the preprocessing by inputting weights 181 in the cells of the matrix.

The judgment device 10 stores the selected candidates of the conditions in the memory device 20. When performing the flowchart shown in FIG. 6, the judgment device 10 selects the conditions from the candidates specified by the user.

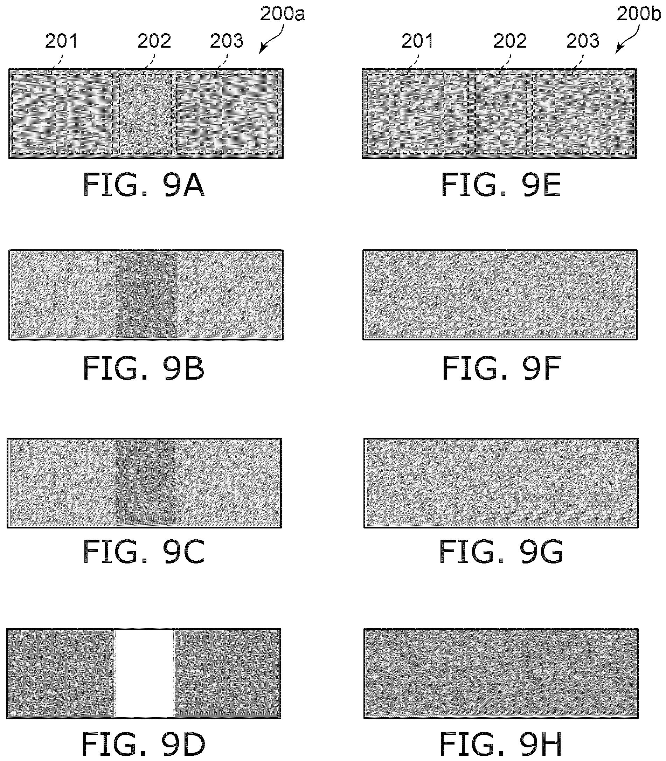

FIGS. 9A to 9H, FIGS. 10A to 10E, and FIGS. 11A to 11F are schematic views for describing the processing of the image.

FIGS. 9A and 9E respectively show images obtained by imaging a portion of an article 200a and a portion of an article 200b. Although the images actually are RGB images, the images are converted to grayscale in FIGS. 9A and 9E. The articles 200a and 200b belong to the same type. The article 200a is a good part. The article 200b is a defective part. As shown in FIGS. 9A and 9E, the articles 200a and 200b include regions 201 to 203. When the article that is in the image is a good part, the colors of the regions 201 and 203 are ice green, and the color of the region 202 is rose pink. The inspection processing inspects whether or not red is included in the region 202.

FIGS. 9B to 9D and FIGS. 9F to 9H show processed images processed according to conditions. Specifically, FIGS. 9B and 9F are obtained by extracting only the "G" channel respectively from the images of FIGS. 9A and 9E. FIGS. 9C and 9G are obtained by extracting only the "B" channel from the images of FIGS. 9A and 9E. FIGS. 9D and 9H are obtained by extracting only the "R" channel from the images of FIGS. 9A and 9E.

It can be seen from FIGS. 9B to 9D and FIGS. 9F to 9H that the difference between the pixel values of the region 202 in the image of FIG. 9D and the pixel values of the region 202 in the image of FIG. 9H is greater than the difference between the pixel values of the region 202 in the image of FIG. 9B and the pixel values of the region 202 in the image of FIG. 9F and greater than the difference between the pixel values of the region 202 in the image of FIG. 9C and the pixel values of the region 202 in the image of FIG. 9G. The detection of the defective part is easy when inspecting the image in which only the "R" channel is extracted.

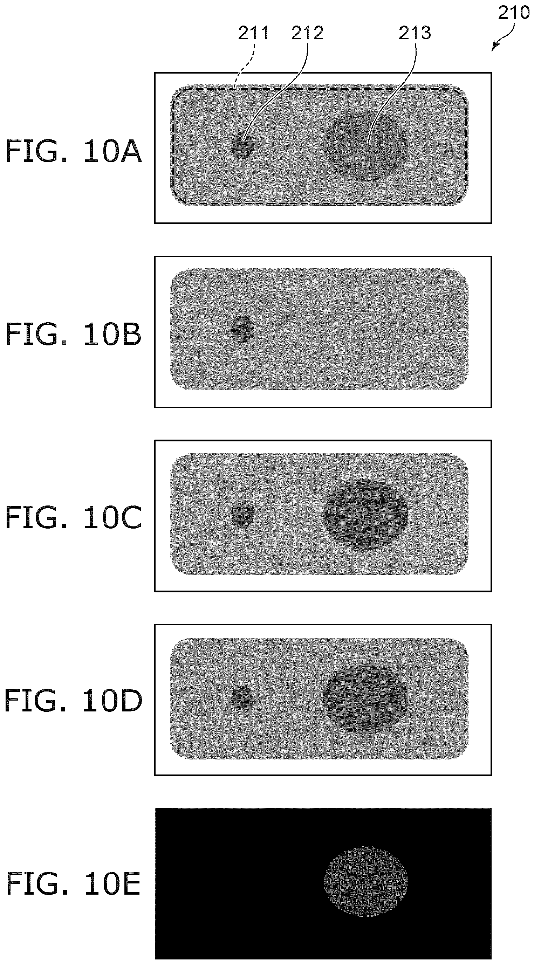

FIG. 10A shows an image obtained by imaging a portion of an article 210. An RGB image is converted into grayscale in FIG. 10A. As shown in FIG. 10A, dirt 212 and rust 213 may be adhered to a region 211 of the article 210. For example, the color of the region 211 is gray. The color of the dirt 212 is black. The color of the rust 213 is red. For the article 210, it is necessary for the article to be judged to be a good part if the rust 213 is not adhered, regardless of whether or not the dirt 212 is adhered. It is necessary for an article to which the rust 213 is adhered to be judged to be a defective part.

FIGS. 10B to 10E show processed images processed according to conditions. FIG. 10B is obtained by extracting only the "R" channel from the image of FIG. 10A. FIG. 10C is obtained by extracting only the "G" channel from the image of FIG. 10A. FIG. 10D is obtained by extracting only the "B" channel from the image of FIG. 10A. FIG. 10E is obtained from the difference between the image of FIG. 10B and the image of FIG. 10C.

In the image of FIG. 10B, the rust 213 is no longer visible; and it is difficult to discriminate between the region 211 and the rust 213. In the images of FIGS. 10C and 10D, the difference between the pixel values of the dirt 212 and the pixel values of the rust 213 is small; and it is difficult to discriminate between the dirt 212 and the rust 213. On the other hand, the dirt 212 is removed in the image of FIG. 10E. The difference between the pixel values of the region 211 and the pixel values of the rust 213 also is large enough to be discriminable. Therefore, compared to the images of FIGS. 10A to 10D, the rust 213 can be more easily detected regardless of the adhesion of the dirt 212. In other words, the detection of the defective part is easy when performing the inspection by using the image obtained from the difference between the image in which the "R" channel is extracted and the image in which the "G" channel is extracted.

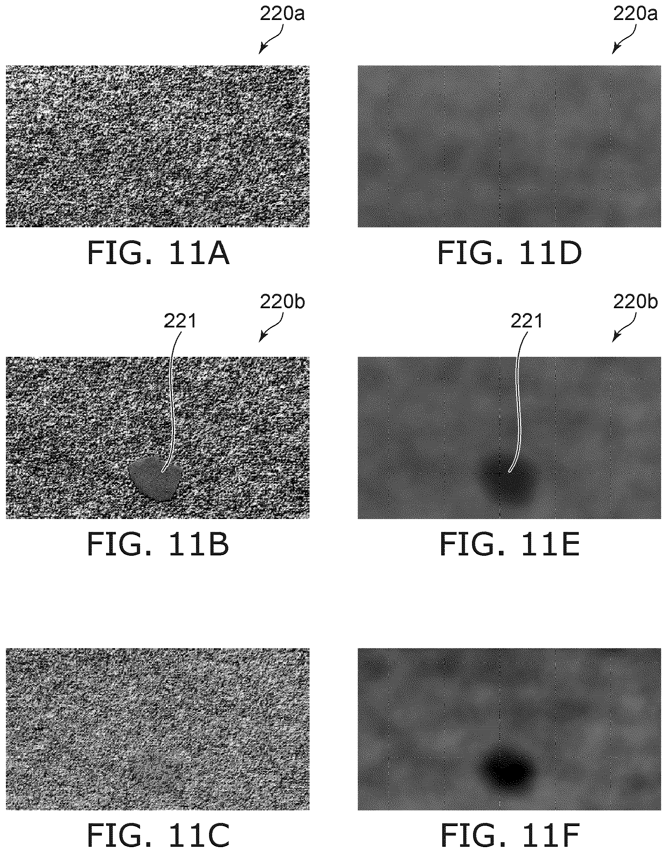

FIGS. 11A and 11B respectively show images obtained by imaging a portion of an article 220a and a portion of an article 220b. RGB images are converted to grayscale in FIGS. 11A and 11B. The articles 220a and 220b belong to the same type. The article 220a is a good part. The article 220b is a defective part. As shown in FIG. 11B, the article 220b includes a defect 221.

FIGS. 11C to 11F show processed images processed according to conditions. Specifically, FIG. 11C is obtained from the difference between the image of FIG. 11A and the image of FIG. 11B. FIGS. 11D and 11E are obtained by applying a dispersion filter (filter size 5×5) respectively to the images of FIGS. 11A and 11B. FIG. 11F is obtained from the difference between the image of FIG. 11D and the image of FIG. 11E.

As shown in FIG. 11C, the pixel value difference of the defect 221 between the good-part image and the defective-part image is small. The detection of the defect 221 becomes difficult as the difference between the good-part image and the defective-part image decreases. It can be seen from the comparison of FIGS. 11C and 11F that the pixel value difference of the defect 221 between the good-part image and the defective-part image to which the dispersion filter is applied is greater than the difference between the original good-part image and defective-part image. The detection of the defect 221 is easier thereby.

Advantages of the embodiment will now be described.

The judgment accuracy of the goodness can be increased by processing the image of the article as described above. On the other hand, the processing that is suited to increasing the accuracy is different for each type of article. The burden on the user is large if the user must search for the appropriate processing for each type of article. There is also a possibility that the user cannot find the appropriate processing. There are also cases where the judgment accuracy is not actually increased even when the user deems the processing to be appropriate.

For this problem, the judgment device 10 according to the embodiment repeats the processing set of steps S12 to S15 as shown in FIG. 6. By repeating the processing set, the multiple conditions are automatically evaluated. The judgment device 10 determines the condition to be used in the inspection based on the evaluations of the conditions. The condition that is suited to improving the accuracy of the judgment can be automatically found thereby.

At least one selected from the group consisting of the judgment result of the goodness for the multiple good-part images and the judgment result of the goodness for the multiple defective-part images is used to evaluate the conditions. Thereby, the judgment device 10 can select a condition that is more suited to the inspection.

To further increase the accuracy of the inspection, it is favorable to appropriately set the thresholds. The judgment device 10 may perform adjustment processing of the multiple thresholds in step S13 of the flowchart shown in FIG. 6.

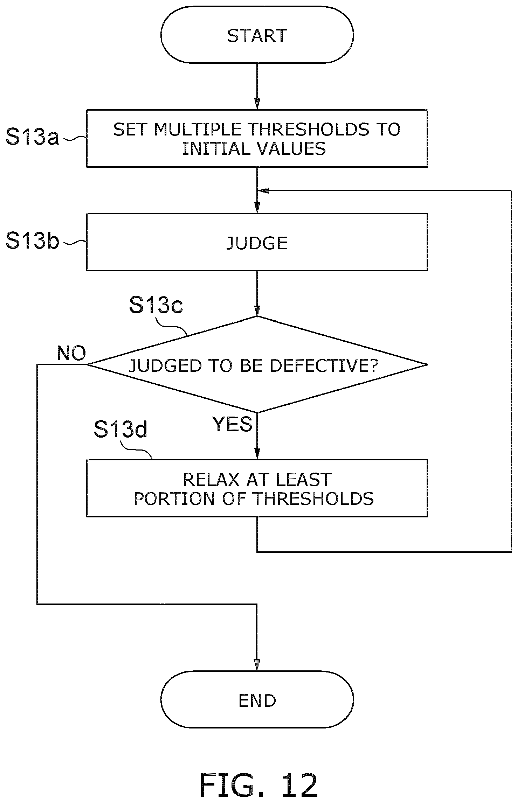

FIG. 12 is a flowchart showing a method for adjusting the thresholds according to the judgment device according to the embodiment.

When the multiple processed images are acquired in step S12, the judgment device 10 sets initial values of the multiple thresholds (step S13a). The judgment device 10 judges the goodness of the article imaged in at least a portion of the good-part processed images (step S13b; first sub-processing).

For convenience of description hereinbelow, a good-part processed image in which the article is judged to be good or defective also is called a good-part processed image judged to be good or defective. A defective-part processed image in which the article is judged to be good or defective also is called a defective-part processed image judged to be good or defective. In the judgment, the judgment device 10 judges whether or not a good-part processed image judged to be defective exists (step S13c).

When a good-part processed image judged to be defective exists, the judgment device 10 relaxes at least a portion of the thresholds (step S13d; second sub-processing). The good-part processed image is less easily judged to be defective due to the relaxation of the thresholds. Specifically, the relaxation of the threshold includes performing one or two selected from increasing the upper limit and reducing the lower limit. When at least a portion of the thresholds is relaxed, the judgment device 10 re-performs step S13b.

Steps S13b to S13d are repeated until all of the good-part processed images are judged to be good. The judgment device 10 ends the processing when there are no processed images judged to be defective in step S13c. The adjustment of the multiple thresholds finishes. Subsequently, step S14 of the flowchart shown in FIG. 6 is performed using the adjusted multiple thresholds.

Stringent values are set as the initial values of the thresholds so that the article imaged in at least one good-part processed image is judged to be defective. Therefore, at least one good-part processed image is judged to be defective in step S13b of the first time. The multiple thresholds may be set so that the articles imaged in all of the good-part processed images are judged to be defective.

In an inspection using an image, it is considered more important not to misjudge a good part as defective than to not misjudge a defective part as good. For example, when performing an inspection having the main object of screening obvious defects, ensuring smooth production without misjudging good parts to be defective is more important than releasing defects to a subsequent process. According to the method for adjusting the thresholds described above, the thresholds are adjusted until the good-part processed images are judged to be good. According to the embodiment, the multiple thresholds are set so that all of the good-part processed images are judged to be good. The likelihood of a good part being misjudged as defective in an actual inspection can be reduced thereby.

After the adjustment processing, it is favorable to evaluate the conditions by using the judgment result of the goodness for defective-part processed images using the adjusted thresholds. A defective-part processed image may be misjudged to be good if the thresholds are excessively relaxed. It can be checked whether or not the thresholds are excessively relaxed by evaluating the conditions by using the judgment result of the goodness for defective-part processed images. For example, a condition for which the evaluation is degraded due to excessively relaxing the thresholds is not employed.

According to the method described above, a condition that is more suited to the inspection can be found by including the adjustment of the thresholds.

The adjustment processing according to the judgment device 10 will now be described in detail.

The initial values of the thresholds may be preset fixed values or may be set based on an average value and a dispersion. The average value is calculated by averaging the pixel values positioned at the same coordinate in multiple good-part processed images. The standard deviation, the variance, the average deviation, etc., of the pixel values at the same coordinate in the multiple good-part processed images can be used as the dispersion. A stringent initial value is set by setting the dispersion to be small. For example, (*µ* - *σ*) and (*µ* + *σ*) are set as the threshold by using the average value µ and the standard deviation σ. Compared to when the initial value is fixed, the number of repetitions of steps S13b to S13d necessary for subsequently adjusting the thresholds can be reduced by using the average value and the dispersion to set the initial value.

Multiple defective-part processed images may be used to set the initial value. After setting the multiple thresholds to initial values, the judgment device 10 judges the goodness of the article imaged in the multiple defective-part processed images. The judgment device 10 approves the initial values when all of the defective-part processed images are judged to be defective. When any one defective-part processed image is judged to be good, the judgment device 10 narrows all of the thresholds by a preset amount. In other words, the judgment device 10 reduces the upper limit of the pixel value by a preset amount or increases the lower limit of the pixel value by a preset amount. The judgment device 10 may narrow only the thresholds of the pixel units not judged to be abnormal.

In step S13b, good-part processed images that are already judged to be good in a previous repeated processing may be excluded from the judgment by the judgment device 10. A good-part processed image that is judged to be good even once will be similarly judged to be good in all subsequent judgment processing. By excluding the good-part processed images judged to be good from the judgment, the calculation amount necessary for repeating steps S13b to S13d can be reduced.

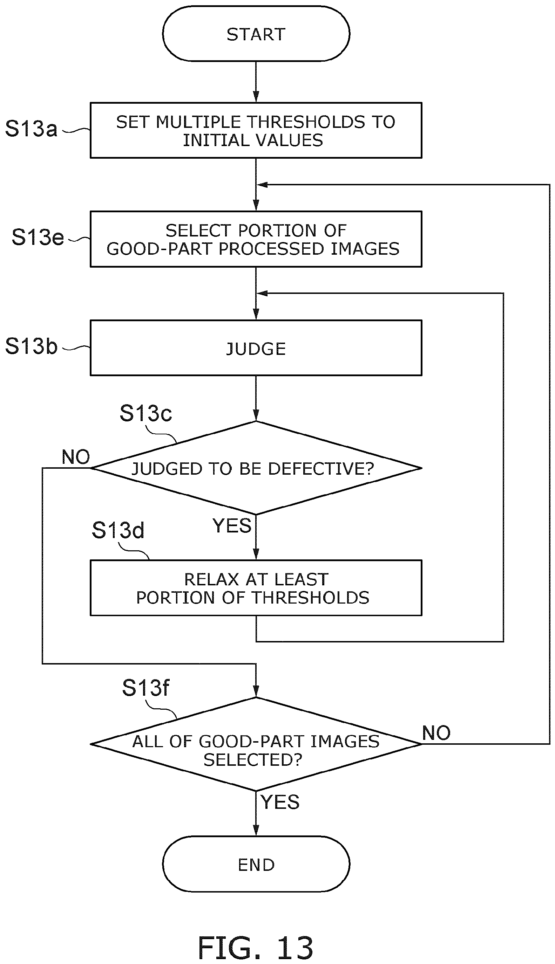

FIG. 13 is a flowchart showing another adjustment method according to the judgment device according to the embodiment.

In one step S13b, the judgment device 10 may judge the goodness of all of the good-part processed images that are prepared, or may judge the goodness of only a portion of the good-part processed images.

For example, after step S13a as shown in FIG. 13, the judgment device 10 deliberately or randomly selects a preset number of good-part processed images from the multiple good-part processed images (step S13e). The judgment device 10 performs step S13b for the selected good-part processed images. The judgment device 10 performs step S13d when a good-part processed image is judged to be defective in step S13b. When all of the good-part processed images selected in step S13b are judged to be good, the judgment device 10 judges whether or not all of the good-part processed images that are prepared have been selected (step S13f). When an unselected good-part processed image exists, the judgment device 10 re-performs step S13e. At this time, the judgment device 10 excludes the good-part processed images once judged to be good from the selection.

When the goodness is judged for only a portion of the good-part processed images in one step S13b, the calculation amount necessary for adjusting the thresholds can be reduced. On the other hand, there is a possibility that a portion of the thresholds may be relaxed more than necessary when performing step S13d based on only the judgment results of a portion of the good-part processed images.

As an example, a first good-part processed image that has relatively few abnormal pixel units is selected in the initial step S13e. In step S13b, the first good-part processed image is judged to be defective. Based on the first good-part processed image, step S13d is performed, and a small number of thresholds are relaxed. Subsequently, in step S13e, a second good-part processed image that has relatively many abnormal pixel units is selected. In step S13b, the second good-part processed image is judged to be defective. Step S13d is performed based on the second good-part processed image; and many thresholds are relaxed. In the example, many thresholds are relaxed after relaxing a small number of thresholds.

Conversely, if all of the good-part processed images are selected at once and many thresholds are relaxed based on the second good-part processed image, there is a possibility that the relaxation of the small number of thresholds may not be performed. Therefore, to increase the judgment accuracy by suppressing the excessive relaxation of the thresholds, it is favorable to judge the goodness for all of the good-part processed images in one step S13b and to adjust the thresholds based on the judgment results.

For example, when relaxing the thresholds, the judgment device 10 extracts all of the abnormal pixel units from the good-part processed images judged to be defective in step S13b and relaxes the thresholds for the abnormal pixel units. Specifically, when the number of good-part processed images judged to be defective is not less than two, the judgment device 10 acquires a union of the abnormal pixel units of the good-part processed images. The judgment device 10 relaxes the thresholds for the abnormal pixel units included in the union. According to this method, the thresholds can be efficiently relaxed, and the calculation amount necessary for adjusting the thresholds can be reduced.

When relaxing the thresholds, the judgment device 10 may select a portion of the good-part processed images from the good-part processed images judged to be defective in step S13b based on the abnormal region. The judgment device 10 relaxes the thresholds for the abnormal pixel units of a selected good-part processed image. As an example, the judgment device 10 selects the good-part processed image of which the surface area of the abnormal region is largest. The judgment device 10 relaxes the thresholds for the abnormal pixel units of the selected good-part processed image. According to this method, the excessive relaxation of the thresholds can be suppressed, and the judgment accuracy of the goodness can be increased.

The pixel units for which the thresholds can be relaxed may be pre-limited by the user. In step S13d, the judgment device 10 relaxes the thresholds for the pixel units that are not limited. A limit of the relaxation may be set for at least a portion of the thresholds. For example, a limit of the upper limit of the threshold or a limit of the lower limit of the threshold is set. The thresholds that reach the limit in step S13d are not relaxed. By setting a limit for the pixel unit or the threshold, the judgment can be prevented from being too relaxed for the pixel unit for which more stringent judgment of the existence or absence of an abnormality is desirable.

For example, the magnitude of the relaxed threshold is preset by the user. When relaxing the thresholds, the judgment device 10 adds the setting value set by the user to the upper limit of the pixel value and subtracts the setting value from the lower limit of the pixel value. Thereby, the thresholds are relaxed by increasing the range between the lower limit and the upper limit.

The magnitude of the relaxed threshold may be determined based on one or two selected from the pixel value of the corresponding pixel unit and the surface area of the set of pixel units for which the thresholds are relaxed. For example, the amount that the threshold is relaxed increases as the difference between the pixel value and the threshold increases. The amount that the threshold is relaxed increases as the surface area of the set of pixel units for which the thresholds are relaxed increases. The time that is necessary for the adjustment of the multiple thresholds can be reduced thereby.

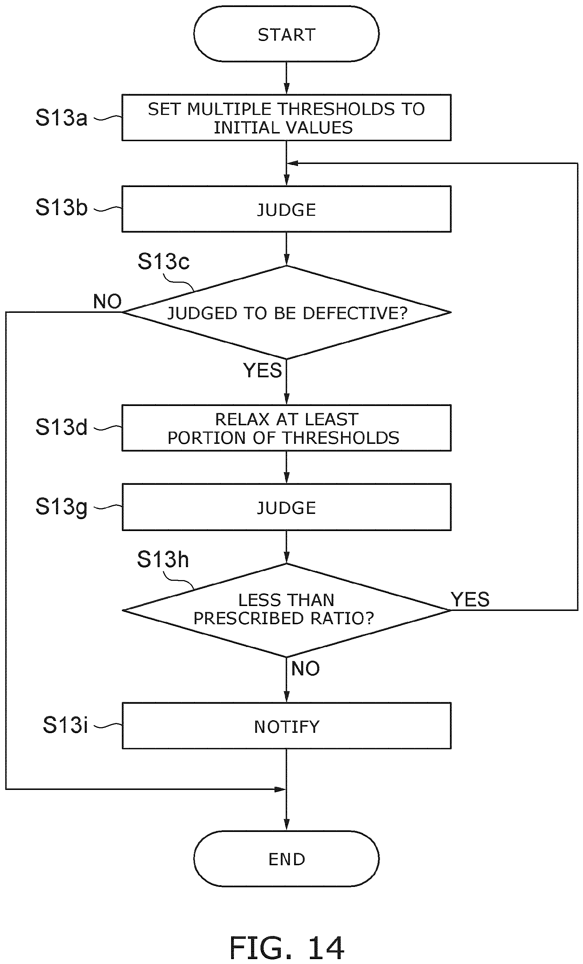

FIG. 14 is a flowchart showing another adjustment method according to the judgment device according to the embodiment.

The judgment device 10 may judge whether or not the multiple thresholds are appropriate by using defective-part processed images. The judgment device 10 performs steps S13b to 13d. After step S13d, the judgment device 10 uses the multiple thresholds to judge the goodness of the article imaged in the defective-part processed images (step S13g; third sub-processing). The judgment device 10 calculates the ratio of the number of defective-part processed images judged to be good to the number of defective-part processed images that are judged. The judgment device 10 determines whether or not the ratio is less than a prescribed ratio (step S13h). The prescribed ratio may be set to zero. In other words, the ratio is not less than the prescribed ratio when even one defective-part processed image is judged to be good.

The goodness of the article imaged in the defective-part processed image is judged similarly to the goodness of the article imaged in the good-part processed image. In other words, the judgment device 10 compares the multiple pixel values in the defective-part processed image to the multiple thresholds and extracts the abnormal pixel units that deviate from the thresholds. The judgment device 10 estimates an abnormal region based on the extracted abnormal pixel units. The judgment device 10 judges the goodness of the article imaged in the defective-part processed image based on a feature of the abnormal region.

The judgment device 10 suspends the repeated processing when the article is judged to be good for not less than the prescribed ratio of the multiple defective-part processed images. The judgment device 10 may notify the user of the suspension of the repeated processing (step S13i). For example, the judgment device 10 notifies the user by a display in the display device 12, transmitting data to a designated terminal device, etc.

The judgment of a defective-part processed image to be good means that at least a portion of the thresholds is too relaxed. If such thresholds are used in an actual inspection, there is a possibility that a defective part may be misjudged as a good part. Useless calculations can be avoided by suspending the repeated processing. For example, when the repeated processing is suspended, steps S14 and S15 are omitted for that condition in the flowchart shown in FIG. 6. The condition is not selected in step S17.

The judgment device 10 can prompt the attention of the user by notifying the user. For example, a defective-part image that is mixed in the good-part images prepared by the user may be causing the thresholds to be too relaxed. By the notification, the user can be prompted to check for an irregularity in the method for adjusting the thresholds.

In the flowchart shown in FIG. 14, step S13g may be performed before step S13d. For example, step S13g may be simultaneously performed with step S13b. When step S13g is simultaneously performed with step S13b, step S13h may be performed after steps S13b and S13g and before step S13c.

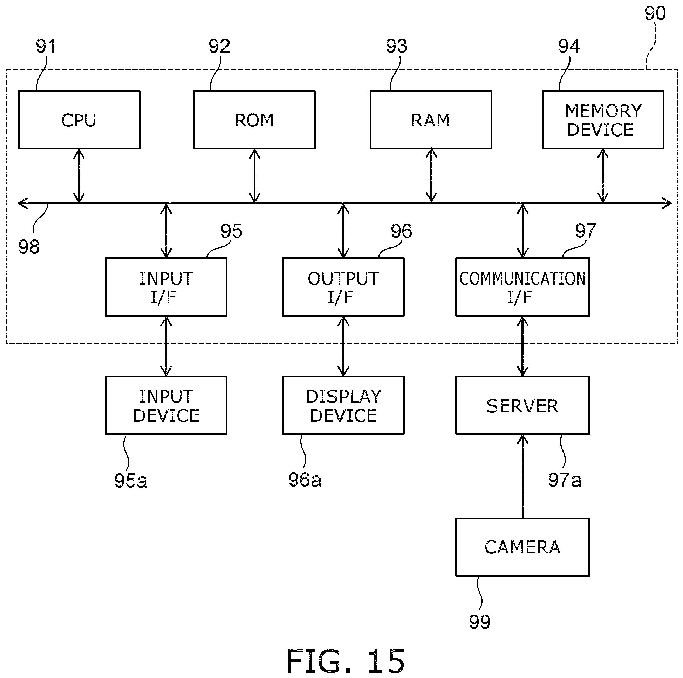

FIG. 15 is a schematic view showing a hardware configuration. The judgment device 10 includes, for example, the hardware configuration shown in FIG. 15. A processing device 90 shown in FIG. 15 includes a CPU 91, ROM 92, RAM 93, a memory device 94, an input interface 95, an output interface 96, and a communication interface 97.

The ROM 92 stores programs that control the operations of a computer. Programs that are necessary for causing the computer to realize the processing described above are stored in the ROM 92. The RAM 93 functions as a memory region into which the programs stored in the ROM 92 are loaded.

The CPU 91 includes a processing circuit. The CPU 91 uses the RAM 93 as work memory to execute the programs stored in at least one of the ROM 92 or the memory device 94. When executing the programs, the CPU 91 executes various processing by controlling configurations via a system bus 98.

The memory device 94 stores data necessary for executing the programs and/or data obtained by executing the programs.

The input interface (I/F) 95 connects the processing device 90 and an input device 95a. The input I/F 95 is, for example, a serial bus interface such as USB, etc. The CPU 91 can read various data from the input device 95a via the input I/F 95.

The output interface (I/F) 96 connects the processing device 90 and a display device 96a. The output I/F 96 is, for example, an image output interface such as Digital Visual Interface (DVI), High-Definition Multimedia Interface (HDMI (registered trademark)), etc. The CPU 91 can transmit the data to the display device 96a via the output I/F 96 and cause the display device 96a to display an image.

The communication interface (I/F) 97 connects the processing device 90 and a server 97a that is outside the processing device 90. The communication I/F 97 is, for example, a network card such as a LAN card, etc. The CPU 91 can read various data from the server 97a via the communication I/F 97. A camera 99 images articles and stores the images in the server 97a.

The memory device 94 includes at least one selected from a hard disk drive (HDD) and a solid state drive (SSD). The input device 95a includes at least one selected from a mouse, a keyboard, a microphone (audio input), and a touchpad. The display device 96a includes at least one selected from a monitor and a projector. A device such as a touch panel that functions as both the input device 95a and the display device 96a may be used.

The memory device 94 may function as the memory device 20. The input device 95a may function as the input device 11. The display device 96a may function as the display device 12. The camera 99 may function as the imaging device 30.

The processing of the various data described above may be recorded, as a program that can be executed by a computer, in a magnetic disk (a flexible disk, a hard disk, etc.), an optical disk (CD-ROM, CD-R, CD-RW, DVD-ROM, DVD±R, DVD±RW, etc.), semiconductor memory, or a recording medium (a non-transitory computer-readable storage medium) that can be read by another nontemporary computer.

For example, information that is recorded in the recording medium can be read by a computer (or an embedded system). The recording format (the storage format) of the recording medium is arbitrary. For example, the computer reads the program from the recording medium and causes a CPU to execute the instructions recited in the program based on the program. In the computer, the acquisition (or the reading) of the program may be performed via a network.

According to embodiments described above, a judgment device and a judgment system are provided in which the condition for processing an image can be automatically determined. Similar effects can be obtained by causing a computer to execute the judgment method described above.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the invention. Moreover, above-mentioned embodiments can be combined mutually and can be carried out.

## Claims

1. A judgment device (10) judging a goodness of an article (A) by using an image of the article,
the judgment device determining one of a plurality of conditions (110) included in condition data (100) by repeating a processing set,
the processing set including
first processing (S11) of selecting one of the plurality of conditions, each of the plurality of conditions specifying preprocessing (130) and a channel (120) to be used,
second processing (S12) of acquiring a plurality of processed images by applying the selected condition to each of a plurality of good-part images and a plurality of defective-part images,
third processing (S14) of judging the goodness of the article imaged in each of the plurality of processed images based on a result of comparing a plurality of thresholds and a plurality of pixel units, the plurality of pixel units being included in each of the plurality of processed images, and
fourth processing (S15) of determining an evaluation of the selected condition by using at least one selected from the group consisting of a judgment result of the goodness for the plurality of good-part images and a judgment result of the goodness for the plurality of defective-part images,
the determining of the one of the plurality of conditions being based on the evaluations of the conditions.

2. The judgment device (10) according to claim 1, wherein
the evaluation of the selected condition (110) is determined using at least two selected from the group consisting of a number of articles (A) judged to be good among the plurality of good-part images, a number of articles judged to be defective among the plurality of good-part images, a number of articles judged to be good among the plurality of defective-part images, and a number of articles judged to be defective among the plurality of defective-part images in the fourth processing.

3. The judgment device (10) according to claim 1 or 2, wherein
adjustment processing (S13) of adjusting the plurality of thresholds is performed between the second processing (S12) and the third processing (S14).

4. The judgment device (10) according to claim 3, wherein
the plurality of processed images includes a plurality of good-part processed images obtained by applying the selected condition to the plurality of good-part images,
the adjustment processing includes (S13):
first sub-processing (S13b) of judging the goodness of the article imaged in at least a portion of the plurality of good-part processed images based on the plurality of thresholds;
second sub-processing (S13d) of relaxing the at least a portion of the plurality of thresholds when the article imaged in at least one of the plurality of good-part processed images is judged to be defective; and
adjusting the plurality of thresholds by repeating the second sub-processing until the first sub-processing judges the article imaged in each of the plurality of good-part processed images to be good, and
the third processing (S14) includes comparing the plurality of pixel units included in each of the plurality of processed images to the adjusted plurality of thresholds.

5. The judgment device (10) according to claim 4, wherein
the adjustment processing (S13) includes setting initial values (S13a) of the plurality of thresholds to cause the article imaged in the at least one of the plurality of good-part processed images to be judged to be defective.

6. The judgment device (10) according to claim 5, wherein
the adjustment processing (S13) includes:
calculating an average value and a dispersion of pixel values among the plurality of good-part images for each of the pixel units; and
setting the initial values (S13a) based on the average values and the dispersions.

7. The judgment device (10) according to any one of claims 4 to 6, wherein
the first sub-processing (S13b) includes extracting at least one abnormal pixel unit deviating from the threshold among a plurality of the pixel units of the plurality of processed images, and
the second sub-processing (S13d) includes relaxing at least a portion of at least one of the thresholds for the at least one abnormal pixel unit.

8. The judgment device (10) according to any one of claims 4 to 7, wherein
for the at least a portion of the plurality of good-part processed images, the first sub-processing (S13b) includes:
extracting an abnormal pixel unit deviating from the threshold among a plurality of the pixel units;
estimating an abnormal region based on the abnormal pixel unit; and
judging the goodness of the article based on a feature of the abnormal region.

9. The judgment device (10) according to claim 8, wherein
the second sub-processing (S13d) includes:
selecting one of the plurality of good-part processed images in which a surface area of the abnormal region is largest, and
relaxing the threshold for the abnormal pixel unit of the one of the plurality of good-part processed images.

10. The judgment device (10) according to claim 8 or 9, wherein
the feature of the abnormal region is at least one selected from the group consisting of a surface area of the abnormal region, a shape of the abnormal region, and a distribution of the pixel values in the abnormal region.

11. The judgment device (10) according to any one of claims 4 to 10, wherein
in the repetition of the first and second sub-processing (S13b,S13d), the first sub-processing is not performed for the good-part processed images of which the article is already judged to be good.

12. The judgment device (10) according to any one of claims 4 to 11, wherein
the plurality of processed images includes a plurality of defective-part processed images obtained by applying the selected condition to the plurality of defective-part images,
the adjustment processing (S13) includes performing third sub-processing (S13g) of judging the goodness of the article imaged in the plurality of defective-part processed images based on the plurality of thresholds,
the first sub-processing (S13b), the second sub-processing (S13d), and the third sub-processing are repeated, and
the third sub-processing includes suspending the repetition when the article imaged in not less than a prescribed ratio of the plurality of defective-part processed images is judged to be good.

13. The judgment device (10) according to claim 12, wherein
the first processing (S11) includes setting initial values of the plurality of thresholds to cause the articles imaged in each of the plurality of defective-part processed images to be judged to be defective.

14. The judgment device (10) according to any one of claims 4 to 13, further performing
inspection processing (S1-S8) of judging a goodness of an article in an image by using the determined one of the plurality of conditions (110) and the adjusted plurality of thresholds.

15. A judgment system (1), comprising:
the judgment device (10) according to any one of claims 1 to 14; and
an imaging device (30).

16. A judgment method causing a computer (90) to judge a goodness of an article (A) by using an image of the article,
the method causing the computer to determine one of a plurality of conditions (110) included in condition data (100) by repeating a processing set,
the processing set including:
first processing (S11) of selecting one of the plurality of conditions, each of the plurality of conditions specifying preprocessing (130) and a channel (120) to be used;
second processing (S12) of acquiring a plurality of processed images by applying the selected condition to each of a plurality of good-part images and a plurality of defective-part images;
third processing (S14) of judging the goodness of the article imaged in each of the plurality of processed images based on a result of comparing a plurality of thresholds and a plurality of pixel units, the plurality of pixel units being included in each of the plurality of processed images; and
fourth processing (S15) of determining an evaluation of the selected condition by using at least one selected from the group consisting of a judgment result of the goodness for the plurality of good-part images and a judgment result of the goodness for the plurality of defective-part images,
the determining of the one of the plurality of conditions being based on the evaluations of the conditions.

17. A program causing a computer (90) to judge a goodness of an article (A) by using an image of the article,
the program causing the computer to determine one of a plurality of conditions (110) included in condition data (100) by repeating a processing set,
the processing set including:
first processing (S11) of selecting one of the plurality of conditions, each of the plurality of conditions specifying preprocessing (130) and a channel (120) to be used;
second processing (S12) of acquiring a plurality of processed images by applying the selected condition to each of a plurality of good-part images and a plurality of defective-part images;
third processing (S14) of judging the goodness of the article imaged in each of the plurality of processed images based on a result of comparing a plurality of thresholds and a plurality of pixel units, the plurality of pixel units being included in each of the plurality of processed images; and
fourth processing (S15) of determining an evaluation of the selected condition by using at least one selected from the group consisting of a judgment result of the goodness for the plurality of good-part images and a judgment result of the goodness for the plurality of defective-part images,
the determining of the one of the plurality of conditions being based on the evaluations of the conditions.

18. A storage medium storing the program according to claim 17.
